# EUROPÄISCHE PATENTSCHRIFT

(11) **EP 2 650 671 B1**
(45) Veröffentlichungstag und Bekanntmachung des Hinweises auf die Patenterteilung: **06.09.2017**
(21) Anmeldenummer: 13001810.4
(22) Anmeldetag: 09.04.2013
(51) Int. Cl.: G01N 21/359, G01N 21/47, G01N 21/49

(54) **Verfahren und Vorrichtung zur Bestimmung der Konzentrationsverteilung von einer oder mehreren Substanzen in einer Probe**
Method and apparatus for determining the concentration distribution of one or more substances in a sample
Procédé et dispositif de détermination de la répartition de la concentration d'une ou plusieurs substances dans un échantillon

(30) Priorität: 12.04.2012 DE 102012007190
(43) Veröffentlichungstag der Anmeldung: 16.10.2013
(73) Patentinhaber: Hochschule Trier - Trier University of Applied Sciences, 54293 Trier (DE)
(72) Erfinder: Regier, Prof. Dr.-Ing. Marc, 76751 Jockgrim (DE)
(74) Vertreter: Patentanwälte Dr. Keller, Schwertfeger

(56) Entgegenhaltungen:
- EP-A1- 2 259 047
- DE-A1- 10 211 382
- US-A- 5 589 932
- US-A1- 2002 026 106
- US-A1- 2005 092 920
- US-A1- 2005 228 246
- US-A1- 2007 201 788
- US-A1- 2010 004 875

## Beschreibung

Die vorliegende Erfindung betrifft ein Verfahren nach Anspruch 1 und eine Vorrichtung nach Anspruch 8 zur Bestimmung der Konzentrationsverteilung einer oder mehrerer Substanzen in einer Probe in Abhängigkeit von der Probentiefe.
Bei der Herstellung von verschiedenen Produkten wie beispielsweise bei der Herstellung von Nudeln treten während oder am Ende des Prozesses Verteilungen von Substanzen im Produkt auf. So entsteht beispielsweise bei der Trocknung eines flächigen Produkts wie einer Nudel eine Verteilung der Feuchtigkeit über die Tiefe/Dicke des Produkts, so dass sich an der Oberfläche des Produkts ein niedriger Wassergehalt nachweisen lässt, während in der Tiefe des Produkts noch ein hoher Wassergehalt vorhanden ist. Diese Konzentrationsverteilungen im Produkt während bzw. am Ende des Prozesses können einen großen Einfluss auf die Qualität des Produktes haben.
Diese Konzentrationsverteilungen lassen sich bisher einerseits nur destruktiv/invasiv oder andererseits mit einem hohen Aufwand messen. So ist beispielsweise bekannt, die Konzentrationsverteilung von Substanzen über die Dicke einer Probe mit Hilfe von Tomographietechniken zu bestimmen. Eine solche Bestimmung der Konzentrationsverteilung ist aber in einem industriellen Umfeld nicht möglich, da sie viel zu aufwendig und zu teuer ist. Die bisher bekannten invasiven/destruktiven Verfahren sind jedoch unerwünscht, da sie in der Regel einen Eingriff in den industriellen Prozessablauf bedeuten.
Die US 2005/0092920 A1 offenbart ein Verfahren zur dreidimensionalen Analyse einer Oberfläche. Hierbei wird Röntgen- bzw. UV-Strahlung auf eine Oberfläche gestrahlt. Die Röntgen- bzw. UV-Strahlung regt Elektronen an. Die Intensität der emittierten Photonen wird unter unterverschiedenen Winkeln erfasst. Bei dem Messverfahren wird die Probe bewegt, um verschiedene Einfallswinkel zu erhalten. In Abhängigkeit von dem Erfassungswinkel wird die Intensität der Strahlung bestimmt. Aus den gewonnenen Daten können Rückschlüsse auf die Verteilung von Elementen in Abhängigkeit der Tiefe gezogen werden. Dieses Verfahren ist geeignet, um Tiefen von ungefähr 10 nm oder weniger zu analysieren.

In der US 2010/0004875 A1 wird ein Verfahren zur Erfassung eines Defekts auf einer Oberfläche beschrieben. Hierbei wird Laserlicht unter einem Winkel auf eine Probe gestrahlt und erzeugt auf der Probe ein elliptisches Beleuchtungsfeld. Ein Bild des gestreuten Lichts wird von verschiedenen Erfassungseinheiten erfasst. In einer Defektbestimmungseinheit wird auf Basis des gestreuten Lichtes ein Defekt bestimmt. Das gestreute Licht wird mit einer bekannten gestreuten Lichtverteilung vergleichen, die in einer Datenbank hinterlegt ist, um den Defekt zu klassifizieren. Das Verfahren eignet sich, um Mikrodefekte zu bestimmen und zu klassifizieren.
Es ist daher Aufgabe der Erfindung, eine zerstörungsfreie, nicht invasive Messung der Konzentrationsverteilung von einer oder mehreren Substanzen in einer Probe in Abhängigkeit von der Probentiefe bereitzustellen, die einfach durchführbar ist und genaue Ergebnisse liefert, so dass der Einsatz dieses Verfahrens im industriellen Umfeld möglich ist.
Erfindungsgemäß wird die Aufgabe durch ein Verfahren zur Bestimmung der Konzentrationsverteilung in einer oder mehreren Substanzen in einer Probe in Abhängigkeit von der Probentiefe gelöst, welches die folgenden Schritte umfasst:
- Bestrahlen der Probe mit einem Lichtstrahl unter Verwendung einer Strahlungsquelle,
- Erfassen des von der Probe an der Oberfläche und im Inneren der Probe diffus reflektierten Lichts in Form wenigstens eines Spektrums mit wenigstens einem Erfassungsgerät,
- wobei die Bestrahlung der Probe mit einem Lichtstrahl oder die Erfassung des wenigstens einen Spektrums unter einer Vielzahl verschiedener Orts- oder Winkelpositionen erfolgt,
- Speichern des erfassten Spektrums als Funktion der Orts- oder Winkelpositionen der Strahlungsquelle und des wenigstens einen Erfassungsgeräts in einer Recheneinheit,
- Abgleich des wenigstens einen erfassten Spektrums mit in einer Datenbank hinterlegten Spektren, wobei die in der Datenbank hinterlegten Spektren mit der Konzentrationsverteilung von ein oder mehreren Substanzen in Abhängigkeit von der Tiefe korreliert sind,
- Angabe der Konzentrationsverteilung von einer oder mehreren Substanzen in der Probe als Funktion der Probentiefe, wobei der Lichtstrahl elektromagnetische Strahlung im Nahinfrarotbereich ist.

Im Rahmen der Erfindung ist unter Datenbank jedes System zur elektronischen Datenverwaltung zu verstehen. Eine Datenbank im Sinne der Erfindung kann Datenmengen speichern und/oder benötigte Teilmengen bedarfsgerecht für Benutzer und Anwendungsprogramme bereitstellen. Die Verarbeitung der Daten kann mittels einer Vielzahl von Möglichkeiten erfolgen, beispielsweise mittels neuronaler Lernverfahren.

Das erfindungsgemäße Verfahren stellt ein nicht invasives Verfahren dar. Da es mit vergleichsweise einfachen Mitteln der Spektroskopie arbeitet, ermöglicht das erfindungsgemäße Verfahren eine einfache und rasche Angabe der Konzentrationsverteilung von einer oder mehreren Substanzen in der Probe als Funktion der Probentiefe.

Bei einer bevorzugten Ausführungsform des erfindungsgemäßen Verfahrens wird die Probe mit dem Lichtstrahl aus einer vorgegebenen Einstrahlwinkelposition bestrahlt. Der an und in der Probe diffus reflektierte Lichtstrahl wird in Form einer Vielzahl von Spektren mittels wenigstens eines Erfassungsgeräts an einer Vielzahl von Erfassungswinkelpositionen erfasst. Die Vielzahl der erfassten Spektren wird als Funktion der Einstrahlwinkelposition und der Erfassungswinkelposition gespeichert.

Bei einer bevorzugten Weiterbildung erfasst das wenigstens eine Erfassungsgerät eine Vielzahl verschiedener Spektren gleichzeitig an verschiedenen Erfassungswinkelpositionen. Auf diese Weise ist eine besonders schnelle Erfassung des diffus reflektierten Lichtstrahls in Form von Spektren an verschiedenen Erfassungswinkelpositionen möglich.

Bei einer alternativen Ausführungsform des Verfahrens wird die Probe mit einem Lichtstrahl aus einer Vielzahl von Einstrahlwinkelpositionen bestrahlt. Der an und in der Probe diffus reflektierte Lichtstrahl wird mittels eines Erfassungsgeräts an einer vorgegebenen Erfassungswinkelposition erfasst. Die erfassten Spektren werden als Funktion der Einstrahlwinkelposition und der Erfassungswinkelposition gespeichert.

Bei einer weiteren Variante des erfindungsgemäßen Verfahrens wird die Probe mit einem Lichtstrahl aus einer Einstrahlwinkelposition von 0° bestrahlt. Der an und in der Probe diffus reflektierte Lichtstrahl wird in Form einer Vielzahl von Spektren mittels wenigstens eines Erfassungsgeräts an einer Erfassungswinkelposition von 0° erfasst, wobei die Strahlungsquelle und das wenigstens eine Erfassungsgerät im Abstand voneinander angeordnet sind. Die Vielzahl der erfassten Spektren werden als Funktion des Abstandes zwischen Strahlungsquelle und Erfassungsgerät gespeichert.

Bei einer bevorzugten Weiterbildung des Verfahrens ist ein Erfassungsgerät vorgesehen, wobei entweder die Strahlungsquelle oder das Erfassungsgerät entlang der Probenoberfläche verschoben werden. Die erfassten Spektren werden als Funktion des Abstands der Strahlungsquelle und des Erfassungsgeräts gespeichert.

Gegenstand der vorliegenden Erfindung ist auch eine Vorrichtung zur Durchführung des erfindungsgemäßen Verfahrens.

Bevorzugte Ausführungsformen der Erfindung werden anhand der beigefügten Zeichnungen beschrieben, in denen zeigen:
- Fig. 1: eine Vorrichtung für ein Verfahren gemäß einer ersten Ausführungsform,
- Fig. 2: eine Vorrichtung für ein Verfahren gemäß einer zweiten Ausführungsform,
- Fig. 3: eine Vorrichtung für ein Verfahren gemäß einer dritten Ausführungsform
- Fig. 4: Reflexionsspektren von Papier mit unterschiedlichem Feuchteprofil bei unterschiedlichen Einstrahlwinkeln des Lichtstrahls.

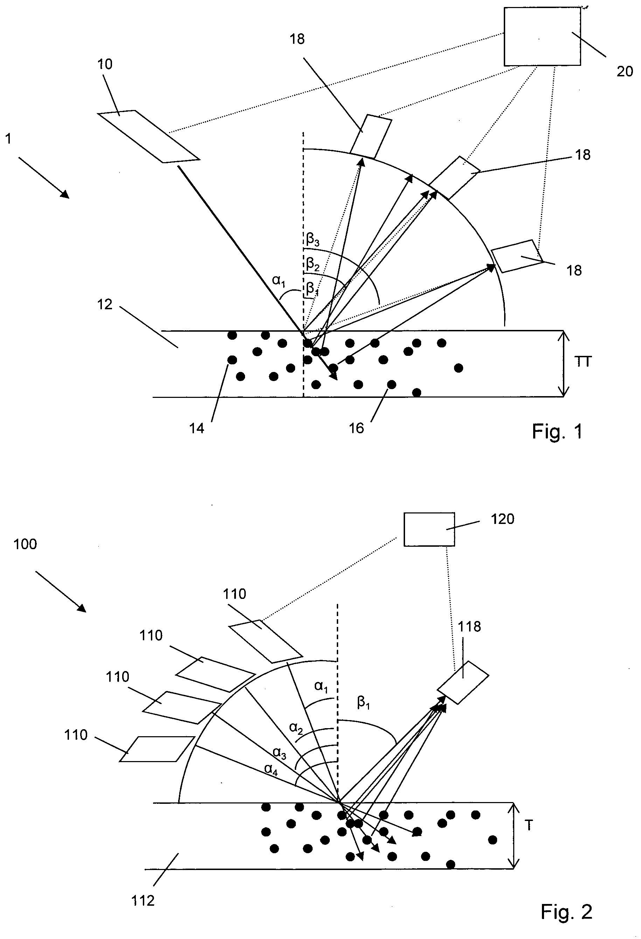

Fig. 1 zeigt eine Vorrichtung 1 für ein Verfahren gemäß einer ersten Ausführungsform.

Ein Lichtstrahl wird von einer Lichtquelle 10 auf eine Probe 12 gestrahlt. In der Probe 12 befinden sich eine oder mehrere eingelagerte Substanzen 14, die eine Verteilung über die Tiefe T der Probe 12 aufweisen. Die Einstrahlung des Lichtstrahls auf die Probe 12 erfolgt aus einer Einstrahlwinkelposition α₁ gegenüber der Oberflächennormalen. Bei dem Lichtstrahl handelt es sich um elektromagnetische Strahlung im Nahinfrarotbereich. Der Lichtstrahl wird sowohl an der Oberfläche der Probe 12 als auch im Inneren der Probe an einzelnen Partikeln 16 der Substanz 14 gestreut. Die an den Partikeln 16 und an der Oberfläche der Probe 12 gestreute Strahlung wird mittels eines Erfassungsgeräts 18 erfasst. Die Erfassung des von der Probenoberfläche und den Partikeln 16 diffus gestreuten Lichtstrahls erfolgt an verschiedenen Erfassungswinkelpositionen β₁, β₂, β₃. Das Erfassungsgerät 18 wird somit an einer Vielzahl vorgegebener Erfassungswinkelpositionen β₁, β₂, β₃ angeordnet. Der gestreute Lichtstrahl wird hierbei an jeder Erfassungswinkelposition β₁, β₂, β₃ als ein Spektrum erfasst.

Die Erfassung der reflektierten Spektren als Funktion der Erfassungswinkelposition erfolgt zeitlich hintereinander, indem der Erfassungsgerät 18 von einer Erfassungswinkelposition β₁, β₂, β₃ zur einer anderen Erfassungswinkelposition β₁, β₂, β₃ geführt wird. Jedes an einer Erfassungswinkelposition β₁, β₂, β₃ erfasste Spektrum wird als Funktion der Erfassungswinkelposition β₁, β₂, β₃ in einer Recheneinheit 20 gespeichert. Die Recheneinheit 20 umfasst eine Datenbank mit Referenzspektren und eine Ausgabeeinheit.

Die Referenzspektren sind Spektren, die die Konzentration einer oder mehrerer Substanzen als Funktion der Tiefe in der Probe bei gleichen Messbedingungen wiedergeben. Ein Abgleich der gemessenen Spektren mit den hinterlegten Spektren ermöglicht somit die Angabe der Konzentrationsverteilung einer oder mehrerer Substanzen als Funktion der Tiefe der Probe. Die Angabe der Konzentrationsverteilung erfolgt schließlich über die Ausgabeeinheit.

Alternativ zu einem einzigen Erfassungsgerät 18, das für jede Erfassungswinkelposition des Erfassungsgeräts ein Spektrum erfasst, kann ein Messarray vorgesehen sein, das eine Vielzahl von Erfassungsgeräten aufweist, die jeweils unter einer vorgegebenen Erfassungswinkelposition gegenüber der Oberflächennormalen angeordnet sind, so dass ein zeitgleiches Erfassen der reflektierten Spektren an einer Vielzahl von vorgegebenen Erfassungswinkelpositionen β₁, β₂, β₃ möglich ist.

Figur 2 zeigt eine Vorrichtung 100 für eine zweite Ausführungsform des erfindungsgemäßen Verfahrens, bei dem das Erfassungsgerät 118 ortsfest ist und an einer vorgegebenen Erfassungswinkelposition β₁ gegenüber der Oberflächennormalen angeordnet ist. Bei dem in Figur 2 dargestellten Verfahren wird die Strahlungsquelle 110 nacheinander in verschiedene Einstrahlwinkelpositionen α₁, α₂, α₃, α₄ geführt. In jeder Einstrahlwinkelposition α₁, α₂, α₃, α₄ wird die Probe 112 mit dem Lichtstrahl bestrahlt. Der an und in der Probe 118 reflektierte Lichtstrahl wird in Form von Spektren als Funktion der Einstrahlwinkelpositionen α₁, α₂, α₃, α₄ des eingestrahlten Lichts mit dem ortsfesten Erfassungsgerät 118 erfasst.

Auch bei dem in Zusammenhang mit Figur 2 dargestellten Verfahren werden die von den Erfassungsgeräten 118 erfassten Spektren in einer Recheneinheit 120 gespeichert und mit Spektren, die in einer in der Recheneinheit 120 befindlichen Datenbank hinterlegt sind, verglichen. Die in der Datenbank abgelegten Spektren sind Referenzspektren, die die Konzentration einer oder mehrerer Substanzen als Funktion der Tiefe in der Probe 112 bei gleichen Messbedingungen wiedergeben. Ein Abgleich der gemessenen Spektren mit den hinterlegten Spektren ermöglicht somit die Angabe der Konzentrationsverteilung einer oder mehrerer Substanzen als Funktion der Tiefe der Probe 112.

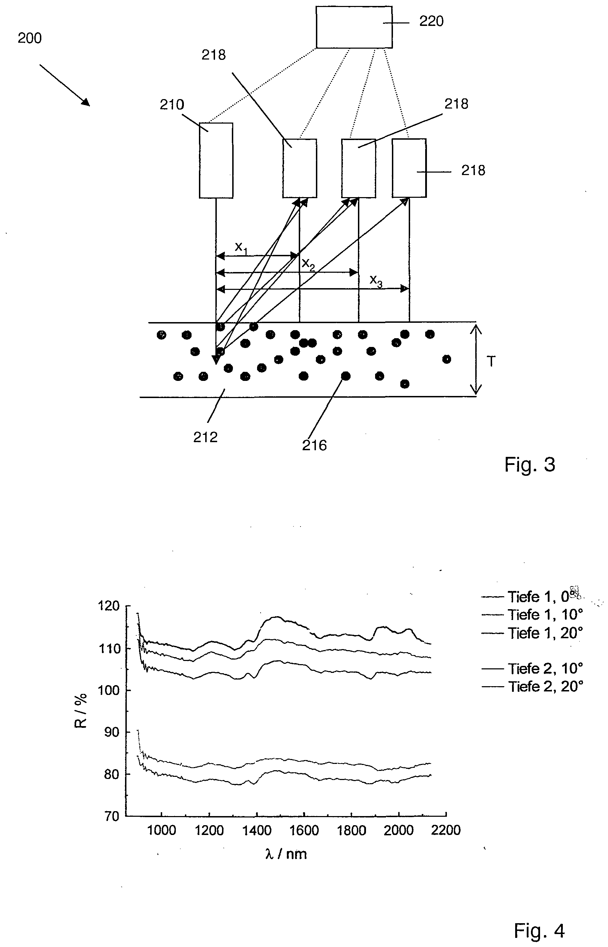

Figur 3 zeigt eine Vorrichtung 200 für eine dritte Ausführungsform des erfindungsgemäßen Verfahrens, bei dem die Strahlungsquelle 210 einen Lichtstrahl senkrecht auf die Probe 212 strahlt. Mehrere Erfassungsgeräte 218 sind im Abstand von der Strahlungsquelle 210 angeordnet und erfassen die diffus reflektierte Strahlung in Form eines Spektrums als Funktion des Abstandes x₁, x₂, x₃ von der Strahlungsquelle 210.

Die von den Erfassungsgeräten 218 erfassten Spektren werden als Funktion des Abstands x₁, x₂, x₃ der Erfassungsgeräte 218 und der Strahlungsquelle 210 in einer Recheneinheit 220 gespeichert und mit unter gleichen Bedingungen erfassten Spektren verglichen. Die mit der Konzentrationsverteilung von einer oder mehreren Substanzen in einer Probe in Abhängigkeit von der Probentiefe korrelierten Vergleichsspektren ermöglichen die Angabe der Konzentrationsverteilung von Partikeln 216 in der Probe 210 über die Tiefe T.

Die Vielzahl von Erfassungsgeräten 218 können als ein Erfassungsarray ausgebildet sein.

Wenn in Figur 3 auch eine Vielzahl von Erfassungsgeräten 218 vorgesehen ist, so kann das Verfahren auch mit einem Erfassungsgerät 218 durchgeführt werden, das gegenüber der Strahlungsquelle 210 verschoben wird. Hierbei werden die Spektren als Funktion des Abstandes x₁, x₂, x₃ zwischen Strahlungsquelle 210 und Erfassungsgerät 218 nacheinander aufgenommen.

Anstelle des Erfassungsgeräts 218 kann auch die Strahlungsquelle 210 gegenüber dem Erfassungsgerät 218 verschoben werden.

In Figur 4 sind Reflexionsspektren von Papier mit unterschiedlichem Feuchteprofil aus verschiedenen Einstrahlwinkelpositionen gezeigt. Die Wassermoleküle befinden sich bei der mit Tiefe 1 bezeichneten Probe in einer anderen Tiefe als bei der mit Tiefe 2 bezeichneten Probe. Man erkennt, dass die Spektren der beiden Proben bei gleichen Einstrahlwinkelpositionen unterschiedlich sind.

Vergleicht man somit gemessene Spektren mit unter gleichen Messbedingungen aufgenommenen Referenzspektren, die mit einer Konzentrationsverteilung von ein oder mehreren Substanzen korreliert sind, lässt sich die Konzentrationsverteilung einer Substanz über die Tiefe einer Probe angeben.

## Patentansprüche

1. Verfahren zur Bestimmung der Konzentrationsverteilung von einer oder mehreren Substanzen in einer Probe (12; 112; 212) in Abhängigkeit von der Probentiefe (T), umfassend die Schritte:
- Bestrahlen der Probe (12; 112; 212) mit einem Lichtstrahl unter Verwendung einer Strahlungsquelle (10; 110; 210),
- Erfassen des von der Probe (12; 112; 212) an der Oberfläche und im Inneren der Probe (12; 112; 212) diffus reflektierten Lichts in Form wenigstens eines Spektrums mit wenigstens einem Erfassungsgerät (18; 118; 218),
- wobei die Bestrahlung der Probe (12; 112; 212) mit einem Lichtstrahl oder die Erfassung des wenigstens einen Spektrums unter einer Vielzahl verschiedener Orts- oder Winkelpositionen erfolgt,
- Speichern der erfassten Spektren als Funktion der Orts- oder Winkelpositionen der Strahlungsquelle (10; 110; 210) und des wenigstens einen Erfassungsgeräts (18; 118; 218) in einer Recheneinheit (20; 120; 220),
- Abgleich des wenigstens einen erfassten Spektrums mit in einer Datenbank hinterlegten Spektren, wobei die in der Datenbank hinterlegten Spektren mit der Konzentrationsverteilung von ein oder mehreren Substanzen in Abhängigkeit von der Probentiefe (T) korreliert sind,
- Angabe der Konzentrationsverteilung von einer oder mehreren Substanzen in der Probe (12; 112; 212) als Funktion der Probentiefe (T)
wobei der Lichtstrahl elektromagnetische Strahlung im Nahinfrarotbereich ist.

2. Verfahren nach Anspruch 1, **dadurch gekennzeichnet, dass**
- die Probe (12) aus einer vorgegebenen Einstrahlwinkelposition (α₁) mit dem Lichtstrahl bestrahlt wird,
- der an und in der Probe (12) diffus reflektierte Lichtstrahl mittels wenigstens eines Erfassungsgeräts (18) in Form einer Vielzahl von Spektren an einer Vielzahl von Erfassungswinkelpositionen (β₁, β₂, β₃) erfasst wird,
- die Vielzahl der erfassten Spektren als Funktion der Einstrahlwinkelposition (α₁) und der Erfassungswinkelposition (β₁, β₂, β₃) gespeichert werden.

3. Verfahren nach Anspruch 2, **dadurch gekennzeichnet, dass** das wenigstens eine Erfassungsgerät (18) eine Vielzahl verschiedener Spektren gleichzeitig an verschiedenen Erfassungswinkelpositionen (β₁, β₂, β₃) erfasst.

4. Verfahren nach Anspruch 1, **dadurch gekennzeichnet, dass**
- die Probe (112) aus einer Vielzahl von Einstrahlwinkelpositionen (α₁, α₂, α₃, α₄) mit dem Lichtstrahl bestrahlt wird,
- der an und in der Probe (112) diffus reflektierte Lichtstrahl als eine Vielzahl von Spektren mittels eines Erfassungsgeräts (118) an einer vorgegebenen Erfassungswinkelposition (β₁) erfasst wird,
- die Vielzahl der erfassten Spektren als Funktion der Einstrahlwinkelposition (α₁, α₂, α₃, α₄) und der Erfassungswinkelposition (β₁) gespeichert werden.

5. Verfahren nach einem der vorhergehenden Ansprüche, **dadurch gekennzeichnet, dass** die Einstrahlwinkelposition α und die Erfassungswinkelposition β von 0° verschieden sind.

6. Verfahren nach Anspruch 1, **dadurch gekennzeichnet, dass**
- die Probe (212) mit dem Lichtstrahl aus einer Einstrahlwinkelposition von 0° bestrahlt wird,
- der an und in der Probe (212) diffus reflektierte Lichtstrahl in Form von einer Vielzahl von Spektren mittels wenigstens eines Erfassungsgeräts (218) unter einer Erfassungswinkelposition von 0° erfasst wird,
- wobei die Strahlungsquelle (210) und das wenigstens eine Erfassungsgerät (218) im Abstand voneinander angeordnet sind und
- die Vielzahl der erfassten Spektren als Funktion des Abstandes (x₁, x₂, x₃) zwischen Strahlungsquelle (210) und dem wenigstens einen Erfassungsgerät (218) gespeichert werden.

7. Verfahren nach Anspruch 6, **dadurch gekennzeichnet, dass** ein Erfassungsgerät (218) vorgesehen ist und die Strahlungsquelle (210) oder das Erfassungsgerät (218) entlang der Probenoberfläche verschoben werden.

8. Vorrichtung zur Durchführung eines Verfahrens nach einem der Ansprüche 1 bis 7, **dadurch gekennzeichnet, dass** die Vorrichtung (1; 100; 200) umfasst:
- eine Strahlungsquelle (10; 110; 210) zum Aussenden eines Lichtstrahls, wobei der Lichtstrahl elektromagnetische Strahlung im Nahinfrarotbereich ist,
- wenigstens ein Erfassungsgerät (18; 118; 218) zur Erfassung des an und in einer Probe diffus reflektierten Lichtstrahls in Form einer Vielzahl von Spektren,
- eine Recheneinheit (20; 120; 220) zum Speichern der Vielzahl der erfassten Spektren, zum Vergleichen der erfassten Spektren mit in einer Datenbank hinterlegten Spektren, wobei die in der Datenbank hinterlegten Spektren mit der Konzentrationsverteilung von einer oder mehreren Substanzen in Abhängigkeit von der Probentiefe (T) korreliert sind, und zur
Ausgabe der Konzentrationsverteilung ein oder mehrerer Substanzen als Funktion der Probentiefe (T).

9. Vorrichtung nach Anspruch 8, **dadurch gekennzeichnet, dass** das Erfassungsgerät (18; 18; 218) als Erfassungsarray ausgebildet ist.

## Claims

1. Method for determining the concentration distribution of one or more substances in a sample (12; 112; 212) depending on the sample depth (T), said method comprising the steps of:
- irradiating the sample (12; 112; 212) with a light beam using a radiation source (10; 110; 210),
- detecting the light that is reflected in a diffused manner by the sample (12; 112; 212), on the surface of and inside the sample (12; 112; 212), in the form of at least one spectrum by means of at least one detection apparatus (18; 118; 218),
- wherein the sample (12; 112; 212) is irradiated with a light beam or the at least one spectrum is detected at a plurality of different locations or angular positions,
- storing the detected spectra as a function of the locations or angular positions of the radiation source (10; 110; 210) and of the at least one detection apparatus (18; 118; 218) in an arithmetic-logic unit (20; 120; 220),
- comparing the at least one detected spectrum with spectra recorded in a database, wherein the spectra recorded in the database are correlated with the concentration distribution of one or more substances depending on the sample depth (T),
- indicating the concentration distribution of one or more substances in the sample (12; 112; 212) as a function of the sample depth (T),
wherein the light beam is electromagnetic radiation in the near-infrared range.

2. Method according to claim 1, **characterised in that**
- the sample (12) is irradiated by the light beam from a predefined single-beam angular position (α₁),
- the light beam that is reflected in a diffused manner on and in the sample (12) is detected as a plurality of spectra at a plurality of detection angular positions (β₁, β₂, β₃) by means of at least one detection apparatus (18),
- the plurality of detected spectra are stored as a function of the single-beam angular position (α₁) and the detection angular position (β₁, β₂, β₃).

3. Method according to claim 2, **characterised in that** the at least one detection apparatus (18) detects a plurality of different spectra simultaneously at different detection angular positions (β₁, β₂, β₃).

4. Method according to claim 1, **characterised in that**
- the sample (112) is irradiated by the light beam from a plurality of single-beam angular positions (α₁, α₂, α₃, α₄),
- the light beam that is reflected in a diffused manner on and in the sample (112) is detected as a plurality of spectra at a predefined detection angular position (β₁) by means of a detection apparatus (118),
- the plurality of detected spectra are stored as a function of the single-beam angular position (α₁, α₂, α₃, α₄) and the detection angular position (β₁).

5. Method according to any of the preceding claims, **characterised in that** the single-beam angular position α and the detection angular position β are different from 0°.

6. Method according to claim 1, **characterised in that**
- the sample (212) is irradiated with a light beam from a single-beam angular position of 0°,
- the light beam that is reflected in a diffused manner on and in the sample (212) is detected as a plurality of spectra at a detection angular position of 0° by means of at least one detection apparatus (218),
- the radiation source (210) and the at least one detection apparatus (218) being arranged at a distance from one another and
- the plurality of detected spectra is stored as a function of the distance (x₁, x₂, x₃) between the radiation source (210) and the at least one detection apparatus (218).

7. Method according to claim 6, **characterised in that** a detection apparatus (218) is provided and the radiation source (210) or the detection apparatus (218) is moved along the sample surface.

8. Device for carrying out a method according to any of claims 1 to 7, **characterised in that** the device (1; 100; 200) comprises:
- a radiation source (10; 110; 210) for emitting a light beam, the light beam being electromagnetic radiation in the near-infrared range,
- at least one detection apparatus (18; 118; 218) for detecting the light beam that is reflected in a diffused manner on and in a sample and is in the form of a plurality of spectra,
- an arithmetic-logic unit (20; 120; 220) for storing the plurality of detected spectra, for comparing the detected spectra with spectra recorded in a database, the spectra recorded in the database being correlated with the concentration distribution of one or more substances depending on the sample depth (T), and for indicating the concentration distribution of one or more substances as a function of the sample depth (T).

9. Device according to claim 8, **characterised in that** the detection apparatus (18; 18; 218) is designed as a detection array.

## Revendications

1. Procédé de détermination de la répartition de concentration d'une ou plusieurs substances dans un échantillon (12 ; 112 ; 212) en fonction de la profondeur (T) de l'échantillon, comprenant les étapes suivantes :
- éclairage de l'échantillon (12; 112; 212) avec un faisceau lumineux en utilisant une source de rayonnement (10 ; 110 ; 210),
- détection de la lumière réfléchie de manière diffuse par l'échantillon (12 ; 112 ; 212) à la surface et à l'intérieur de l'échantillon (12 ; 112 ; 212) sous la forme d'au moins un spectre à l'aide d'au moins un appareil de détection (18; 118 ; 218),
- l'éclairage de l'échantillon (12 ; 112 ; 212) avec un faisceau lumineux ou la détection dudit au moins un spectre étant effectué(e) sous une pluralité de positions locales ou angulaires différentes,
- mémorisation des spectres détectés en fonction des positions locales ou angulaires de la source de rayonnement (10 ; 110 ; 210) et dudit au moins un appareil de détection (18; 118; 218) dans une unité de calcul (20 ; 120 ; 220),
- comparaison dudit au moins un spectre avec des spectres enregistrés dans une base de données, les spectres enregistrés dans la base de données étant corrélés à la répartition de concentration d'une ou plusieurs substances en fonction de la profondeur (T) de l'échantillon,
- indication de la répartition de concentration d'une ou plusieurs substances dans l'échantillon (12; 112; 212) en fonction de la profondeur (T) de l'échantillon,
le faisceau lumineux étant un rayonnement électromagnétique dans le domaine de l'infrarouge proche.

2. Procédé selon la revendication 1, **caractérisé en ce que**
- l'échantillon (12) est éclairé avec le faisceau lumineux à partir d'une position angulaire d'incidence (α₁) prédéfinie,
- le faisceau lumineux réfléchi de manière diffuse sur et dans l'échantillon (12) est détecté au moyen d'au moins un appareil de détection (18) sous la forme d'une pluralité de spectres à une pluralité de positions angulaires de détection (β₁, β₂, β₃),
- la pluralité des spectres détectés sont mémorisés en fonction de la position angulaire d'incidence (α₁) et de la position angulaire de détection (β₁, β₂, β₃).

3. Procédé selon la revendication 2, **caractérisé en ce que** ledit au moins un appareil de détection (18) détecte une pluralité de spectres différents en même temps à différentes positions angulaires de détection (β₁, β₂, β₃).

4. Procédé selon la revendication 1, **caractérisé en ce que**
- l'échantillon (112) est éclairé avec le faisceau lumineux à partir d'une pluralité de positions angulaires d'incidence (α₁, α₂, α₃, α₄),
- le faisceau lumineux réfléchi de manière diffuse sur et dans l'échantillon (112) est détecté sous la forme d'une pluralité de spectres au moyen d'un appareil de détection (118) à une position angulaire de détection (β₁) prédéfinie,
- la pluralité des spectres détectés sont mémorisés en fonction de la position angulaire d'incidence (α₁, α₂, α₃, α₄) et de la position angulaire de détection (β₁).

5. Procédé selon l'une des revendications précédentes, **caractérisé en ce que** la position angulaire d'incidence α et la position angulaire de détection β sont différentes de 0°.

6. Procédé selon la revendication 1, **caractérisé en ce que**
- l'échantillon (212) est éclairé avec le faisceau lumineux à partir d'une position angulaire d'incidence de 0°,
- le faisceau lumineux réfléchi de manière diffuse sur et dans l'échantillon (212) est détecté sous la forme d'une pluralité de spectres au moyen d'au moins un appareil de détection (218) sous une position angulaire de détection de 0°,
- la source de rayonnement (210) et ledit au moins un appareil de détection (218) étant disposés à distance l'une de l'autre et
- la pluralité des spectres détectés sont mémorisés en fonction de la distance (x₁, x₂, x₃) entre la source de rayonnement (210) et ledit au moins un appareil de détection (218).

7. Procédé selon la revendication 6, **caractérisé en ce qu'**un appareil de détection (218) est prévu et que la source de rayonnement (210) ou l'appareil de détection (218) est déplacé(e) le long de la surface de l'échantillon.

8. Dispositif pour mettre en oeuvre un procédé selon l'une des revendications 1 à 7, **caractérisé en ce que** le dispositif (1 ; 100 ; 200) comprend :
- une source de rayonnement (10; 110; 210) pour envoyer un faisceau lumineux, le faisceau lumineux étant un rayonnement électromagnétique dans le domaine de l'infrarouge proche,
- au moins un appareil de détection (18 ; 118 ; 218) pour détecter le faisceau lumineux réfléchi de manière diffuse sur et dans un échantillon sous la forme d'une pluralité de spectres,
- une unité de calcul (20 ; 120 ; 220) pour mémoriser la pluralité des spectres détectés, pour comparer les spectres détectés avec des spectres enregistrés dans une base de données, les spectres enregistrés dans la base de données étant corrélés à la répartition de concentration d'une ou plusieurs substances en fonction de la profondeur (T) de l'échantillon, et pour délivrer la répartition de concentration d'une ou plusieurs substances en fonction de la profondeur (T) de l'échantillon.

9. Dispositif selon la revendication 8, **caractérisé en ce que** l'appareil de détection (18 ; 118 ; 218) est réalisé sous la forme d'un réseau de détection.
